# FASCICULE DE BREVET EUROPEEN

(11) **EP 1 071 597 B1**
(45) Date de publication et mention de la délivrance du brevet: **05.03.2003**
(21) Numéro de dépôt: 99913417.4
(22) Date de dépôt: 15.04.1999
(51) Int. Cl.: B60T 13/567

(54) **DISPOSITIF DE FREINAGE A ENTRETOISE SIMPLIFIEE**
BREMSVORRICHTUNG MIT VEREINFACHTEM ABSTANDSHALTER
BRAKING DEVICE WITH SIMPLIFIED BRACE

(30) Priorité: 24.04.1998 FR 9805116
(43) Date de publication de la demande: 31.01.2001
(73) Titulaire: Bosch Systemes de Freinage, 93700 Drancy (FR)
(72) Inventeur: LEBOISNE, Cédric, F-75011 Paris (FR); VERBO, Ulysse, F-93600 Aulnay-sous-Bois (FR)
(74) Mandataire: Hurwic, Aleksander Wiktor
(86) Numéro de dépôt international: FR9900884
(87) Numéro de publication internationale: WO99055568

(56) Documents cités:
- DE-A- 4 209 648
- US-A- 4 416 191

## Description

La présente invention concerne un dispositif de freinage pour véhicule à moteur selon le préambule de la revendication 1.

Des dispositifs de ce type sont connus dans l'art antérieur, tel qu'illustré par exemple par le document de brevet EP-0 119 880.

En dépit de son intérêt, la réalisation illustrée dans ce document antérieur- impose, pour pouvoir guider la vis de l'entretoise, d'avoir recours à un tube qui fait lui aussi partie intégrante de l'entretoise.

Le document de brevet US 4 416191 décrit quant à lui une réalisation relativement complexe et comportant de nombreux éléments assemblés.

L'invention se situe dans ce contexte et a pour but de s'affranchir de cette contrainte.

A cette fin, le dispositif de l'invention, par ailleurs conforme à la définition qu'en donne le préambule ci-dessus, est essentiellement caractérisé en ce que l'extrémité arrière de la vis est engagée et librement coulissante dans le manchon, en ce que le manchon présente une longueur propre à interdire à l'extrémité arrière de la vis de s'échapper de ce manchon, et en ce que la première butée est placée, sur la section, intermédiaire de la vis, en une position propre à permettre au filetage de ne pas faire saillie hors du manchon avant que le servomoteur ne soit fixé au support.

La section intermédiaire de la vis porte avantageusement une seconde butée destinée à venir en appui contre une face frontale du manchon lorsque la vis est vissée dans le support, la tête de serrage venant alors en appui sur la coquille avant, sur laquelle elle exerce une contrainte de compression prédéterminée.

Le dispositif de l'invention comprend en outre de préférence un premier joint d'étanchéité pour rendre étanche la traversée de la coquille avant par la vis entre la tête de serrage et la première butée, et un second joint d'étanchéité pour rendre étanche la traversée du manchon par la vis entre la seconde butée et le filetage.

Si la cloison mobile comprend une membrane souple, cette membrane peut par exemple former un soufflet entourant une partie de la section intermédiaire de la vis et terminé par une lèvre en appui étanche sur cette section intermédiaire.

D'autres caractéristiques et avantages de l'invention ressortiront clairement de la description qui en est faite ci-après, à titre indicatif et nullement limitatif, en référence aux dessins annexés, dans lesquels:
- la figure 1 est une vue en coupe partielle d'un dispositif conforme à l'invention, observé avant la fixation du servomoteur sur le support;
- la figure 2 est une vue en coupe partielle d'un dispositif conforme à l'invention, observé au moment où le servomoteur est positionné sur le support en vue de sa fixation ultérieure; et

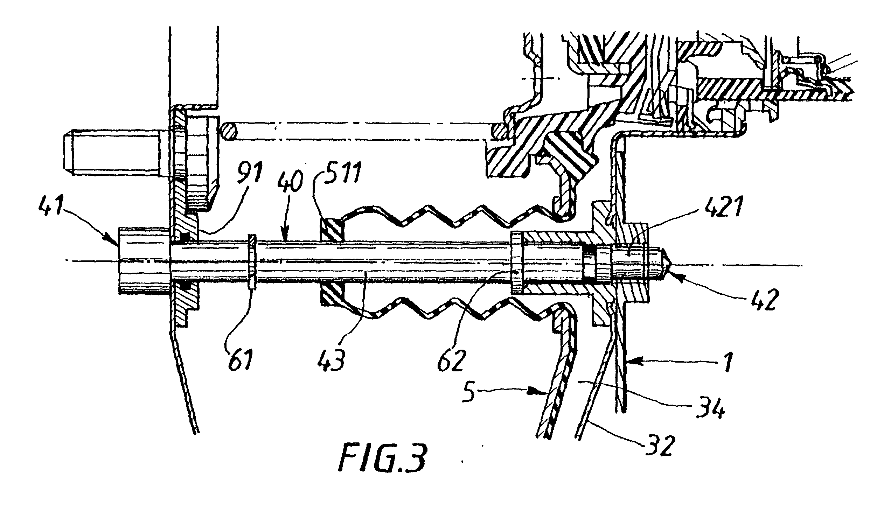

- la figure 3 est une vue en coupe partielle d'un dispositif conforme à l'invention, observé après la fixation du servomoteur sur le support.

Comme indiqué précédemment, l'invention concerne un dispositif de freinage pour véhicule à moteur comprenant essentiellement un support de fixation 1 et un servomoteur pneumatique d'assistance au freinage 2, fixé en fonctionnement au support 1.

Dans la mesure où le document EP - 0 119 880 précité donne une illustration complète et détaillée d'un tel dispositif, seuls ont été représentés aux dessins les éléments utiles ou nécessaires pour comprendre l'objet et les avantages de la présente invention.

Le servomoteur 2 auquel s'applique l'invention comprend lui-même, de façon connue, une enveloppe rigide 3 en général formée d'une coquille avant 31 et d'une coquille arrière 32, cette dernière étant adjacente au support I lorsque le servomoteur est en fonctionnement et fixé au support 1.

L'enveloppe 3 est renforcée par une ou plusieurs entretoises telles que 4, et éventuellement par des renforts supplémentaires tels que la plaque 9.

Cette enveloppe 3 délimite un volume interne dans lequel deux chambres 33, 34 sont séparées l'une de l'autre au moyen d'une cloison mobile 5, qui comprend généralement une membrane souple 50.

L'entretoise 4 traverse la coquille avant 31, la cloison mobile 5, et la coquille arrière 32, et comprend une vis 40 dont une extrémité arrière 42 porte un filetage 421 susceptible d'être vissé dans le support 1, et dont une extrémité avant 41, externe par rapport à la coquille avant 31, forme une tête de serrage 411 susceptible d'exercer un appui sur la coquille avant 31.

Selon l'invention, la vis 40 traverse elle-même directement la coquille avant 31, la cloison mobile 5, et la coquille arrière 32 et présente à cette fin, entre ses deux extrémités 41, 42, une section intermédiaire 43 essentiellement cylindrique.

Comme le montrent les figures, cette section intermédiaire 43 porte une butée avant 61, disposée dans le volume interne 33, 34 que délimite l'enveloppe 3, et distante de la tête de serrage 411.

De son côté, la coquille arrière 32 porte un manchon rigide 7, par exemple serti sur la coquille arrière, et dans lequel l'extrémité arrière 42 de la vis 40 est engagée et librement coulissante.

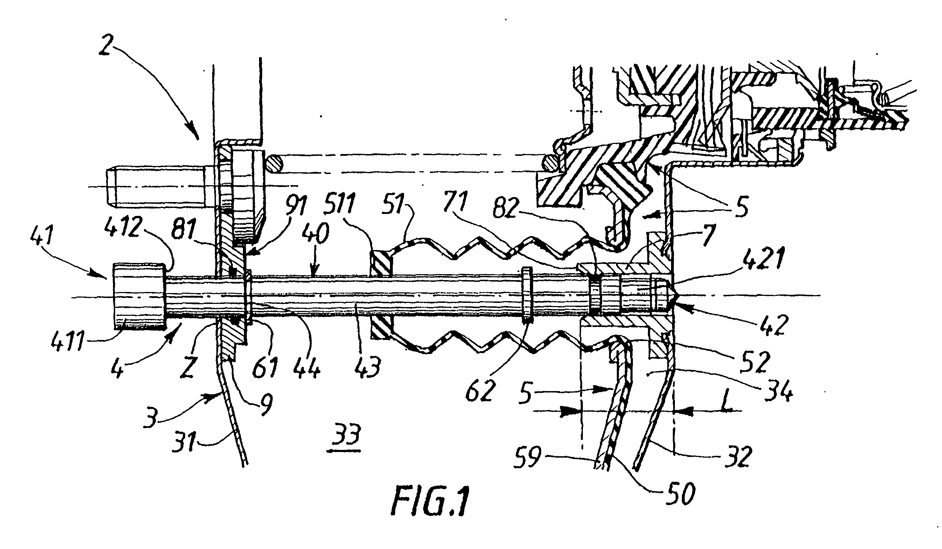

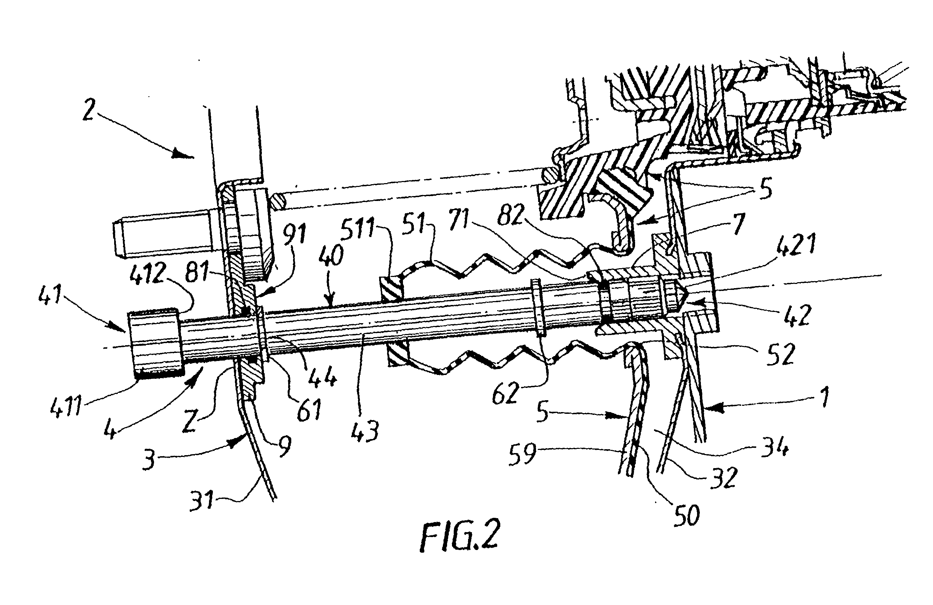

La position de la butée avant 61 sur la section intermédiaire 43 de la vis est choisie, en fonction de la longueur de la vis et de l'épaisseur du servomoteur, de façon telle que le filetage 421 de la vis 40 puisse ne pas faire saillie hors du manchon 7, et donc du servomoteur 2, avant que ce dernier ne soit fixé au support, comme le montrent les figures 1 et 2.

Une fois que la position de la butée avant 61 a été choisie, on donne au manchon 7 une longueur L telle que l'extrémité arrière 42 de la vis 40 ne puisse s'échapper du manchon 7, en dépit de la possibilité qui est donnée par construction à la vis 40 de coulisser par rapport au servomoteur 2 aussi longtemps que ce dernier n'est pas fixé au support 1.

Une façon simple de satisfaire ces conditions consiste donc, par exemple, à disposer la butée avant 61 de manière que, lorsque la vis 40 est tirée au maximum hors de l'enveloppe 3 du côté de sa tête 411 comme le montrent les figures 1 et 2, l'extrémité arrière 42 de la vis affleure de la coquille arrière 32 de l'enveloppe 3 et que le manchon, dans cette position de la vis, retienne l'extrémité arrière 42 de celle-ci.

Dans tous les cas, la distance séparant la butée avant 61 de l'extrémité arrière 42 de la vis, y compris l'épaisseur de cette butée 61, doit être supérieure à la distance séparant la face frontale 71 du manchon 7 de l'appui 91 de la butée avant 61 sur l'intérieur de la coquille avant 31.

D'autre part, la distance séparant la butée avant 61 du filetage 421, y compris l'épaisseur de cette butée 61 et la longueur du filetage 421, doit être au plus égale à la distance séparant le support 1 de l'appui 91 de la butée avant 61 sur l'intérieur de la coquille avant 31.

Comme le montrent les figures 1 et 2, la butée avant 61 est par exemple constituée par une bague élastique fendue, qui est insérée dans une rainure circulaire 44 de la section intermédiaire 43 de la vis 40 une fois que la vis 40 a été engagée dans la coquille avant 31, et avant que les coquilles avant 31 et arrière 32 ne soient serties l'une sur l'autre, ou réunies l'une à l'autre par tout autre moyen.

La section intermédiaire 43 de la vis 40 peut en outre comporter une seconde butée 62, par exemple formée par une nervure circulaire de la vis 40, et destinée à venir en appui contre la face frontale 71 du manchon 7 lorsque la vis 40 est vissée dans le support 1, et à limiter ainsi le vissage de la vis 40.

De préférence, la distance séparant la seconde butée 62 de l'appui interne 412 de la tête de serrage 411, y compris l'épaisseur de cette butée 62, est inférieure à la distance séparant, avant la fixation du servomoteur, la face frontale 71 du manchon 7 de la zone Z de la coquille avant 31 sur laquelle vient appuyer la tête de serrage 411, de manière que la tête de serrage 411 vienne en appui sur la coquille avant 31 avant que la butée arrière 62 ne vienne en appui sur la face frontale 71 du manchon 7, la vis 40 exerçant ainsi une contrainte de compression prédéterminée sur l'enveloppe du servomoteur après sa fixation sur le support.

Un premier joint d'étanchéité 81, par exemple logé dans une gorge de la plaque de renfort 9, est avantageusement prévu entre la tête de serrage 411 et la première butée 61 pour rendre totalement étanche la traversée de la coquille avant 31 par la vis 40.

De même, un second joint d'étanchéité 82, par exemple logé dans une gorge de la vis entre la seconde butée 62- et le filetage 421 et obturant, en fonctionnement, le manchon 7, est de préférence prévu pour rendre totalement étanche la traversée du manchon 7 par la vis 40.

Dans le cas le plus fréquent où la cloison mobile 5 comprend une membrane souple 50 et une jupe rigide 59, cette jupe est percée d'un orifice 52 pour laisser passer la vis 40, et la membrane 50 forme un soufflet 51 qui entoure une partie de la section intermédiaire 43 de la vis 40 et qui est terminé par une lèvre 51 en appui étanche sur cette section intermédiaire 43.

Bien entendu, le dispositif de l'invention pourra comprendre plusieurs vis telles que la vis 40 illustrée aux figures, et, en pratique, comprendra de préférence deux vis de ce type.

## Revendications

1. Dispositif de freinage pour véhicule à moteur comprenant un support de fixation (1) et un servomoteur pneumatique d'assistance au freinage (2) fixé en fonctionnement au support (1), le servomoteur (2) comprenant lui-même une enveloppe rigide (3) au moins formée d'une coquille avant (31) et d'une coquille arrière (32) qui est adjacente au support (1) en fonctionnement, cette enveloppe rigide (3) étant renforcée au moins par une entretoise (4) et délimitant un volume interne dans lequel deux chambres (33, 34) sont séparées l'une de l'autre au moyen d'une cloison mobile (5), l'entretoise (4) traversant la coquille avant (31), la cloison mobile (5), et la coquille arrière (32), et comprenant une vis (40) dont une extrémité arrière (42) porte un filetage (421) susceptible d'être vissé dans le support (1), et dont une extrémité avant (41), externe par rapport à la coquille avant (31), forme une tête de serrage (411) susceptible d'exercer un appui sur la coquille avant (31), la vis (40) traversant elle-même directement la coquille avant (31), la cloison mobile (5), et la coquille arrière (32) et présentant, entre ses deux extrémités (41, 42), une section intermédiaire (43) essentiellement cylindrique, cette section intermédiaire (43) portant une première butée (61), interne par rapport à la coquille avant (31) et distante de la tête de serrage (411), la coquille arrière (32) portant un manchon (7) **caractérisé en ce que** l'extrémité arrière (42) de la vis (40) est engagée et librement coulissante dans le manchon (7), **en ce que** le manchon (7) présente une longueur (L) propre à interdire à l'extrémité arrière (42) de la vis (40) de s'échapper de ce manchon (7), et **en ce que** la première butée (61) est placée, sur la section intermédiaire (43) de la vis, en une position propre à permettre au filetage (421) de ne pas faire saillie hors du manchon (7) avant que le servomoteur ne soit fixé au support.

2. Dispositif de freinage suivant la revendication 1, **caractérisé en ce que** la section intermédiaire (43) de la vis (40) porte une seconde butée (62) destinée à venir en appui contre une face frontale (71) du manchon (7) lorsque la vis (40) est vissée dans le support (1), la tête de serrage (411) venant alors en appui sur la coquille avant (31), sur laquelle elle exerce une contrainte de compression prédéterminée.

3. Dispositif de freinage suivant la revendication 1 ou 2, **caractérisé en ce qu'**il comprend en outre un premier joint d'étanchéité (81) pour rendre étanche la traversée de la coquille avant (31) par la vis (40) entre la tête de serrage (411) et la première butée (61), et un second joint d'étanchéité (82) pour rendre étanche la traversée du manchon (7) par la vis (40) entre la seconde butée (62) et le filetage (421).

4. Dispositif de freinage suivant l'une quelconque des revendications précédentes, **caractérisé en ce que** la cloison mobile (5) comprend une membrane souple (50), et **en ce que** cette membrane (50) forme un soufflet (51) entourant une partie de la section intermédiaire (43) de la vis (40) et terminé par une lèvre (511) en appui étanche sur cette section intermédiaire (43).

## Claims

1. Braking device for a motor vehicle comprising an attachment support (1) and a pneumatic brake-booster (2) fixed when operational to the support (1), the booster (2) itself comprising a rigid casing (3) at least made of a front shell (31) and of a rear shell (32) which is adjacent to the support (1) when operational, this rigid casing (3) being reinforced by at least one strut (4) and delimiting an internal volume in which two chambers (33,34) are separated from one another by means of a moving partition (5), the strut (4) passing through the front shell (31), the moving partition (5) and the rear shell (32) and comprising a screw (40) of which a rear end (42) has a screw thread (421) that can be screwed into the support (1), and of which a front end (41), which is outside the front shell (31), forms a tightening head (411) capable of pressing against the front shell (31), **characterized in that** the screw (40) itself passes directly through the front shell (31), the moving partition (5) and the rear shell (32) and has, between its two ends (41,42) an essentially cylindrical intermediate section (43), **in that** this intermediate section (43) has a first stop (61) which is inside the front shell (31) and distant from the tightening head (411), **in that** the rear shell (32) has a sleeve (7) in which the rear end (42) of the screw (40) is engaged and can slide freely, **in that** the sleeve (7) is of such a length (L) that it can prevent the rear end (42) of the screw (40) from coming out of this sleeve (7), and **in that** the first stop (61) is placed, along the intermediate section (43) of the screw, in a position that allows the screw thread (421) not to project from the sleeve (7) until the booster is fixed to the support.

2. Braking device according to Claim 1, **characterized in that** the intermediate section (43) of the screw (40) has a second stop (62) intended to press against a front face (71) of the sleeve (7) when the screw (40) is screwed into the support (1), the tightening head (411) then coming to press against the front shell (31) against which it exerts a predetermined compressive stress.

3. Braking device according to Claim 1 or 2, **characterized in that** it further comprises a first seal (81) for sealing the penetration through the front shell (31) by the screw (40) between the tightening head (411) and the first stop (61), and a second seal (82) for sealing the penetration through the sleeve (7) by the screw (40) between the second stop (62) and the screw thread (421).

4. Braking device according to any one of the preceding claims, **characterized in that** the moving partition (5) comprises a flexible diaphragm (50), and **in that** this diaphragm (50) forms a bellows (51) surrounding part of the intermediate section (43) of the screw (40) and ending in a lip (511) pressing in a sealed manner against this intermediate section (43).

## Patentansprüche

1. Bremsvorrichtung für ein Kraftfahrzeug, mit einem Befestigungsträger (1) und einem pneumatischen Bremskraftverstärker (2), der im Betrieb am Träger (1) befestigt ist, wobei der Bremskraftverstärker (2) wiederum ein starres Gehäuse (3) aufweist, das zumindest aus einer vorderen Schale (31) und einer hinteren Schale (32) gebildet ist, die zum Träger (1) im Betrieb benachbart ist, wobei dieses starre Gehäuse (3) zumindest durch eine Querstrebe (4) versteift ist und ein Innenvolumen begrenzt, in welchem zwei Kammern (33, 34) mittels einer beweglichen Trennwand (5) voneinander getrennt sind, wobei die Querstrebe (4) die vordere Schale (31), die bewegliche Trennwand (5) und die hintere Schale (32) durchquert und eine Schraube (40) aufweist, von welcher ein hinteres Ende (42) ein Gewinde (421) trägt, das in den Träger (1) geschraubt werden kann, und von welcher ein vorderes Ende (41), das bezüglich der vorderen Schale (31) außen liegt, einen Spannkopf (411) bildet, der auf die vordere Schale (31) einen Druck ausüben kann, wobei die Schraube (40) wiederum direkt die vordere Schale (31), die bewegliche Trennwand (5) und die hintere Schale (32) durchquert und zwischen ihren zwei Enden (41, 42) einen Zwischenabschnitt (43) aufweist, der im wesentlichen zylindrisch ist, wobei dieser Zwischenabschnitt (43) einen ersten Anschlag (61) trägt, der bezüglich der vorderen Schale (31) innen liegt und vom Spannkopf (411) entfernt ist, wobei die hintere Schale (32) eine Hülse (7) trägt, **dadurch gekennzeichnet, daß** das hintere Ende (42) der Schraube (40) mit der Hülse (7) in Eingriff steht und in dieser frei verschiebbar ist, daß die Hülse (7) eine Länge (L) aufweist, die verhindern kann, daß das hintere Ende (42) der Schraube (40) aus dieser Hülse (7) austritt, und daß der erste Anschlag (61) am Zwischenabschnitt (43) der Schraube in einer Position angeordnet ist, die dem Gewinde (421) ermöglichen kann, nicht aus der Hülse (7) vorzustehen, bevor der Servomotor am Träger befestigt ist.

2. Bremsvorrichtung nach Anspruch 1, **dadurch gekennzeichnet, daß** der Zwischenabschnitt (43) der Schraube (40) einen zweiten Anschlag (62) trägt, der dafür vorgesehen ist, an einer Vorderseite (71) der Hülse (7) anzuliegen, wenn die Schraube (40) in den Träger (1) geschraubt ist, wobei der Spannkopf (411) dann an der vorderen Schale (31) anliegt, auf welche er eine vorbestimmte Druckbelastung ausübt.

3. Bremsvorrichtung nach Anspruch 1 oder 2, **dadurch gekennzeichnet, daß** sie außerdem eine erste Dichtung (81) aufweist, um den Durchgang der Schraube (40) durch die vordere Schale (31) zwischen dem Spannkopf (411) und dem ersten Anschlag (61) abzudichten, und eine zweite Dichtung (82) aufweist, um den Durchgang der Schraube (40) durch die Hülse (7) zwischen dem zweiten Anschlag (62) und dem Gewinde (421) abzudichten.

4. Bremsvorrichtung nach einem der vorangehenden Ansprüche, **dadurch gekennzeichnet, daß** die bewegliche Trennwand (5) eine nachgiebige Membran (50) aufweist und daß diese Membran (50) einen Balg (51) bildet, der einen Teil des Zwischenabschnitts (43) der Schraube (40) umgibt und in einer Lippe (511) endet, die dicht an diesem Zwischenabschnitt (43) anliegt.
